# EUROPÄISCHE PATENTANMELDUNG

(11) **EP 3 459 984 A1**
(43) Veröffentlichungstag der Anmeldung: **27.03.2019**
(21) Anmeldenummer: 17192848.4
(22) Anmeldetag: 25.09.2017
(51) Int. Cl.: C08G 18/54, C08G 18/48, C08G 18/76, C08G 101/00

(54) **HERSTELLUNG VON POLYURETHANSCHAUM**

(71) Anmelder: Evonik Degussa GmbH, 45128 Essen (DE)
(72) Erfinder: GLOS, Martin, 46325 Borken (DE)

(57) **Zusammenfassung**

Zusammensetzungen, geeignet zur Herstellung von Polyurethanschäumen, umfassend zumindest eine OH-funktionelle Verbindung (OHV), erhältlich durch die teilweise oder vollständige Hydrierung von Keton-Aldehydharzen, wobei die OH-funktionelle Verbindung mindestens ein Strukturelement der Formel (1a) sowie optional der Formeln (1b) und/oder (1c) enthält, 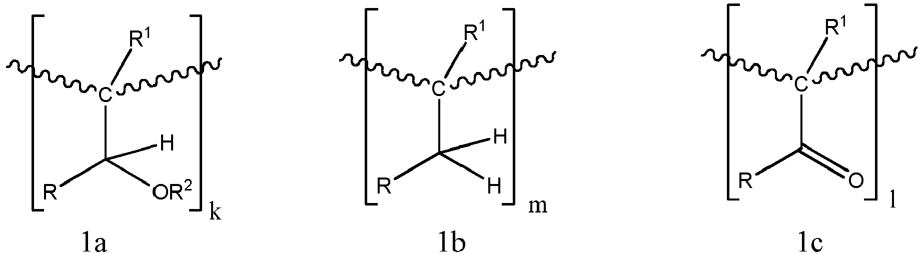 mit
R = aromatisch mit 6-14 Kohlenstoffatomen, (cyclo)aliphatisch mit 1-12 Kohlenstoffatomen,
R¹ = H, CH₂OH,
R² = H, oder ein Rest der Formel -(CH₂-CH(R')O-)y-H
mit R' gleich Wasserstoff, Methyl, Ethyl oder Phenyl und y = 1 bis 50,
k = 2 bis 15, bevorzugt 3 bis 12, besonders bevorzugt 4 bis 11
m = 0 bis 13, bevorzugt 0 bis 9
l = 0 bis 2
wobei die Summe aus k+l+m zwischen 5 und 15, vorzugsweise zwischen 5 und 12 liegt und k > m ist, werden beschrieben.

## Beschreibung

Die vorliegende Erfindung liegt auf dem Gebiet der Polyurethane, insbesondere der Polyurethanschäume. Insbesondere betrifft sie die Herstellung von Polyurethanschäumen unter Verwendung spezieller OHfunktioneller Verbindungen, sowie weiterhin die Verwendung der Schäume, die damit hergestellt wurden. Es handelt sich hierbei insbesondere um Polyurethanhartschäume, bevorzugt offenzellige Polyurethanhartschäume.

Unter Polyurethan (PU) wird im Rahmen der vorliegenden Erfindung insbesondere ein Produkt erhältlich durch Reaktion von Polyisocyanaten und Polyolen bzw. Verbindungen mit Isocyanat-reaktiven Gruppen verstanden. Es können hierbei neben dem Polyurethan auch weitere funktionelle Gruppen gebildet werden, wie z.B. Uretdione, Carbodiimide, Isocyanurate, Allophanate, Biurete, Harnstoffe und/oder Uretimine. Daher werden unter PU im Sinne der vorliegenden Erfindung sowohl Polyurethan als auch Polyisocyanurat, Polyharnstoffe und Uretdion-, Carbodiimid-, Allophanat-, Biuret- und Uretimin-Gruppen enthaltende Polyisocyanat-Reaktionsprodukte verstanden. Unter Polyurethanschaum (PU-Schaum) wird im Rahmen der vorliegenden Erfindung Schaum verstanden, der als Reaktionsprodukt basierend auf Polyisocyanaten und Polyolen bzw. Verbindungen mit Isocyanat-reaktiven Gruppen erhalten wird. Es können hierbei neben dem Namen gebenden Polyurethan auch weitere funktionelle Gruppen gebildet werden, wie z.B. Allophanate, Biurete, Harnstoffe, Carbodiimide, Uretdione, Isocyanurate oder Uretimine.

Bei den meisten Anwendungen für Polyurethanschäume wird versucht, ein möglichst geringes Raumgewicht (Dichte) des Schaumes zu erzielen, um möglichst wenig Material und Kosten aufwenden zu müssen. Hierdurch werden die mechanischen Eigenschaften eines PU-Schaums negativ beeinflusst. So kann ein Sitzpolster mit geringem Raumgewicht nicht die Rückstellkraft und damit den Sitzkomfort erreichen wie ein Schaum mit höherer Dichte. Ebenso gilt dies für Hartschäume, die bei geringeren Dichten entsprechend schlechtere mechanische Eigenschaften, wie z.B. Stauchhärte, aufweisen.

Hierbei kommt es bei geschlossenzelligen Schäumen zum sogenannten Schrumpf. Der Schaum verliert nach seiner Herstellung an Volumen, weil die Polymermatrix dem Atmosphärendruck nicht standhalten kann. Dieser Effekt ist dem Fachmann bekannt. Neben den geschlossenzelligen Hartschäumen gibt es auch offenzellige Hartschäume. Hier tritt das Problem des Schrumpfens nicht auf, aber es besteht ganz allgemein ein Bedürfnis, einen offenzelligen PU-Hartschaum mit möglichst geringer Dichte und möglichst guten mechanischen Eigenschaften bereitstellen zu können, wobei die wichtigste Eigenschaft dabei die Stauchhärte (bestimmbar nach DIN 53421) des Schaumes ist. Hierbei wird der Druck gemessen der aufgewendet werden muss um einen Schaum-Probekörper um 10% zu stauchen.

Bei offenzelligen PU-Hartschäumen werden mit sinkenden Schaumdichten die mechanischen Eigenschaften generell schlechter. Das heisst, die Stauchhärten werden entsprechend geringer und ein Schaum lässt sich einfacher mechanisch verformen. Der prinzipielle Unterschied zwischen Weichschaum und Hartschaum ist hierbei, dass ein Weichschaum ein elastisches Verhalten zeigt und damit die Verformung reversibel ist. Der Hartschaum dagegen wird dauerhaft verformt.

In der Praxis werden offenzellige PU-Hartschäume in verschiedenen Bereichen eingesetzt. wie z.B als offenzelliger Sprühschaum zu Isolationszwecken, Dämmplatten, Akustik-Schäume zur Schallabsorbtion, Verpackungsschaum, Dachhimmel für Automobile oder Rohrummantelungen für Tiefsee-Röhren. Hier wird immer ein optimaler Kompromiss angestrebt, um die besten mechanischen Eigenschaften mit möglichst geringer Schaumdichte zu erreichen. Bei all diesen Anwendungen muss eine Reaktionsmischung, auch Schaum-Formulierung genannt, entsprechend zusammengesetzt sein, so dass die nötigen mechanischen Eigenschaften erreicht werden.

Die konkrete Aufgabe der vorliegenden Erfindung war es nun, die Bereitstellung von PU-Schäumen, insbesondere die Bereitstellung von offenzelligen PU-Hartschäumen, mit verbesserten mechanischen Eigenschaften zu ermöglichen.

Überraschenderweise wurde nun gefunden, dass bei Verwendung bestimmter erfindungsgemäßer OHfunktioneller Verbindungen auf Basis teilweise oder vollständig hydrierter Keton-Aldehydharze PU-Schäume, insbesondere offenzellige PU-Hartschäume, mit verbesserten mechanischen Eigenschaften hergestellt werden können. Die entsprechenden PU-Schäume, insbesondere offenzellige PU-Hartschäume, zeigen bei gleicher Dichte bessere mechanische Eigenschaften. Somit ist es möglich, bei den betreffen Schäumen die Dichten zu erniedrigen ohne schlechtere Stauchhärten in Kauf nehmen zu müssen. Dadurch ist es möglich, entsprechende Produkte wie Kühlmöbel, Dachhimmel, Isolationspanele oder Sprühschaum mit geringerem Gewicht aber gleichen mechanischen Eigenschaften herzustellen als bisher.

Gegenstand der Erfindung sind vor diesem Hintergrund Zusammensetzungen, geeignet zur Herstellung von Polyurethanschäumen, insbesondere offenzelligen PU-Hartschäume, umfassend zumindest eine Isocyanat-Komponente, optional eine Polyolkomponente, optional einen Katalysator, der die Ausbildung einer Urethan- oder Iscyanurat-Bindung katalysiert, optional ein Treibmittel, wobei die Zusammensetzung zusätzlich mindestens eine OH-funktionelle Verbindung (OHV) aufweist, erhältlich durch die teilweise oder vollständige Hydrierung von Keton-Aldehydharzen, wobei die OH-funktionelle Verbindung mindestens ein Strukturelement der Formel (1a) sowie optional der Formeln (1b) und/oder (1c) enthält, 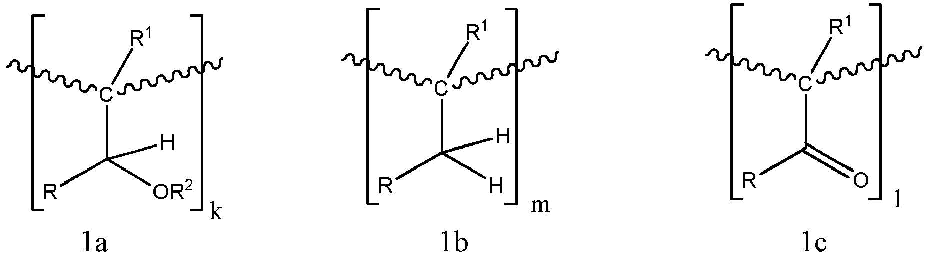 mit
R = aromatischer Kohlenwasserstoffrest mit 6-14 Kohlenstoffatomen oder (cyclo)aliphatischer Kohlenwasserstoffrest mit 1-12 Kohlenstoffatomen, wobei die Kohlenwasserstoffreste ggf. substituiert sein können z.B. mit Heteroatomen, Halogen etc.,
R¹ = H oder CH₂OH,
R² = H oder ein Rest der Formel
   -(CH₂-CH(R')O-)_{y}-H
   mit R' gleich Wasserstoff, Methyl, Ethyl oder Phenyl und y = 1 bis 50,
k = 2 bis 15, bevorzugt 3 bis 12, besonders bevorzugt 4 bis 11,
m = 0 bis 13, bevorzugt 0 bis 9, z.B. 1 bis 9,
l = 0 bis 2, z.B. 1 bis 2,
wobei die Summe aus k+l+m zwischen 5 und 15, bevorzugt zwischen 5 und 12 liegt und k > m ist, mit der Maßgabe, dass zumindest 10 Gew.-Teile, bevorzugt mindestens 20 Gew.-Teile, besonders bevorzugt mindestens 30 Gew.-Teile der enthaltenen Polyole bezogen auf 100 Gew.-Teile Polyolkomponente eine OH-Zahl größer 100, vorzugsweise größer 150, insbesondere größer 200 aufweisen.

Insbesondere sind Polyolkomponente und Katalysator zwingend enthalten, also nicht optional, was einer bevorzugten Ausführungsform der Erfindung entspricht.

Die erfindungsgemäßen OH-funktionellen Verbindungen sind erhältlich durch die teilweise oder vollständige Hydrierung von Keton-Aldehydharzen und enthalten mindestens 1 Strukturelement nach Formel (1a) sowie optional der Formeln (1 b) und/oder (1c).

Die Strukturelemente können alternierend oder statistisch verteilt sein, wobei die Strukturelemente CH₂-Gruppen linear und/oder CH-Gruppen verzweigend verknüpft sein können.

In einer bevorzugten Form der Erfindung enthalten die erfindungsgemäßen OH-funktionellen Verbindungen mindestens 1 Strukturelement nach Formel (2a) sowie optional der Formeln (2b) und/oder (2c), 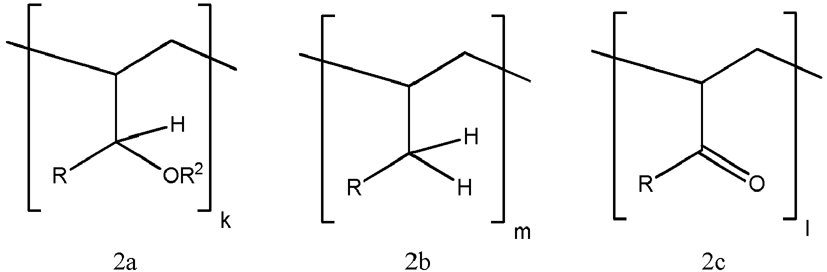 wobei die Indices k, m und I, sowie die Reste R und R² die oben beschriebenen Bedeutungen haben.

Der erfindungsgemäße Gegenstand ermöglicht die Bereitstellung von PU-Schaumstoff, vorzugsweise offenzelligem PU-Hartschaumstoff, der bei gleicher Dichte bessere mechanischen Eigenschaften, insbesondere bessere Stauchhärte, aufweist. Die resultierenden PU-Schaumstoffe sind vorteilhafterweise dimensionsstabil, hydrolysestabil, weisen ein hervorragendes Langzeitverhalten auf. Sie verfügen vorteilhafterweise über gute Isolationseigenschaften, ein hohes Dämmvermögen, hohe mechanische Festigkeit, hohe Steifigkeit, hohe Druckfestigkeit.

Keton-Aldehyd-Harze und ihre Herstellung, insbesondere durch Kondensation von Ketonen mit Aldehyden, sind schon seit langem bekannt. Ihre Herstellung erfolgt z.B. durch alkalikatalysierte Kondensation von Ketonen mit Aldehyden. Als Aldehyde kommen insbesondere Formaldehyd, aber auch andere wie z.B. Acetaldehyd und Furfural in Betracht. Neben aliphatischen Ketonen wie z.B. Aceton können vor allem cyclische Produkte wie Cyclohexanon, Methylcyclohexanon und Cyclopentanon eingesetzt werden. Verfahren zur Herstellung sind z. B. beschrieben in DE 3324287 A1, DE 102007045944 A1, US 2540885, US 2540886, DE 1155909 A1, DE 1300256 und DE 1256898.

Auch die erfindungsgemäß einzusetzenden OH-funktionellen Verbindungen (OHV), erhältlich durch die teilweise oder vollständige Hydrierung von Keton-Aldehydharzen, sind an sich bekannt.

Ihre Herstellung und Verwendung wird in den folgenden Schriften detailliert beschrieben:
DE 102007018812 A1, die hiermit als Referenz eingeführt und auf deren gesamte Offenbarung verwiesen wird und deren Inhalt hiermit in diese Anmeldung aufgenommen wird, beschreibt die Herstellung von carbonylhydrierten Keton-Aldehydharzen sowie die teilweise oder vollständige Umsetzung der Hydroxylgruppen von carbonylhydrierten Keton-Aldehydharzen mit einem oder mehreren Alkylenoxiden und gegebenenfalls anschließender vollständiger oder teilweiser Veresterung mit organischen und/oder anorganischen Säuren, insbesondere wird dort die Herstellung von alkoxylierten Verbindungen der Formel (1a), also mit R2 ≠ H und deren Verwendung als Dispergiermittel beschrieben. Ebenso werden dort Strukturvarianten mit bi-reaktiven Ketonen beschrieben.

DE102006000644A1, die hiermit als Referenz eingeführt und auf deren gesamte Offenbarung verwiesen wird und deren Inhalt hiermit in diese Anmeldung aufgenommen wird, beschreibt dort als Komponente A) die im Sinne der hier vorliegenden Erfindung einsetzbare Hydroxy-funktionellen Harze. Insbesondere werden dort hydrierte Folgeprodukte der Harze aus Keton und Aldehyd beschrieben. Bei der Hydrierung der Keton-Aldehydharze kommt es zur Umwandlung der Carbonylgruppe des Keton-Aldehydharzes in eine sekundäre Hydroxygruppe, dabei kann ein Teil der Hydroxygruppen abgespalten werden, so dass Alkylgruppen resultieren. Es wird die Verwendung in verschiedenen Bereichen, allerdings keine Polyurethanschäume, beschrieben.

DE10326893A1, die hiermit als Referenz eingeführt und auf deren gesamte Offenbarung verwiesen wird und deren Inhalt hiermit in diese Anmeldung aufgenommen wird, beschreibt die Herstellung von Keton-Aldehydharzen, die zur Herstellung der erfindungsgemäß einsertzbaren hydroxy-funktionellen Harze eingesetzt werden können. Es wird die Verwendung in verschiedenen Bereichen, allerdings keine Polyurethanschäume, beschrieben.

Die erfindungsgemäßen Keton-Aldehydharze können aliphatische und/oder cyclische Ketone, vorzugsweise Cyclohexanon und alle alkylsubstituieren Cyclohexanone mit einem oder mehreren Alkylresten, die insgesamt 1 bis 8 Kohlenwasserstoffatome aufweisen, einzeln oder in Mischung enthalten. Als Beispiele können 4-tert-Amylcyclohexanon, 2-sek-Butylcyclohexanon, 2-tert. Butylcyclohexanon, 4-tert.Butylcyclohexanon, 2-Methylcyclohexanaon und 3,3,5-Trimethylcyclohexanon genannt werden. Bevorzugt werden Cyclohexanon, 4-tert.-Butylcyclohexanon und 3,3,5-Trimethylcyclohexanon.

Als aliphatische Aldehyde eignen sich prinzipiell unverzweigte oder verzweigte Aldehyde, wie z.B. Formaldehyd, Acetaldehyd, n-Butyraldehyc und/oder iso-Butyraldehyd sowie Dodecanal usw.; bevorzugt wird jedoch Formaldehyd allein oder in Mischungen eingesetzt.

Das Formaldehyd wird üblicherweise als ca. 25 bis 40 Gew.-%ige wässrige Lösung eingesetzt. Andere Einsatzformen des Formaldehyds wie z.B. auch die Verwendung als para-Formaldehyd oder Trioxan sind ebenfalls möglich. Aromatische Aldehyde wie z.B. Benzaldehyd, können in Mischung mit Formaldehyd ebenfalls enthalten sein.

Als weitere Monomere können die erfindungsgemäßen Keton-Aldehydharze vorrangig Ketone, allein oder in Mischung, enthalten, die alophatischen, cycloaliphatischen, aromatischen oder gemischten Charakter besitzen. Als Beispiele seien Aceton, Acetophenon, Methylethylketon, Heptanon-2, Pentanon-3, Methylisobutylketon, Cyclopentanon, Cyclododecanon, Mischungen aus 2,2,4- und 2,4,4-Trimethylcyclopentanon, Cycloheptanon und Cyclooctanon genannt. Bevorzugt sind jedoch Methylethylketon und Acetophenon. Im Allgemeinen können alle in der Literatur für Ketonharzsynthesen als geeignet genannte Ketone, in der Regel alle C-H-aciden Ketone, eingesetzt werden.

In einer bevorzugten Ausführungsform werden erfindungsgemäße OH-funktionellen Verbindungen (OHV) verwendet, die nach den in DE102007018812A1 und DE 102006000644 A1 beschriebenen Verfahren hergestellt wurden.

Neben den erfindungsgemäßen OH-funktionellen Verbindungen (OHV) können als weitere isocanatreaktiven Substanzen alle nach dem Stand der Technik bekannten isocyanat-reaktiven Komponenten als Polyole zum Einsatz kommen.

Die erfindungsgemäßen OH-funktionellen Verbindungen (OHV) können in Substanz oder auch in einem Lösungsmittel zur Verwendung kommen. Hierbei können alle geeigneten Substanzen zum Einsatz kommen, die bei der Herstellung von PU-Schäumen verwendbar sind. Bevorzugt können als Lösungsmittel Substanzen verwendet werden, die in üblichen Rezepturen bereits zum Einsatz kommen wie z.B. OH-funktionelle Verbindungen, Polyole, Flammschutzmittel, etc.

Da die erfindungsgemäßen OH-funktionellen Verbindungen (OHV) oftmals Schmelzpunkte von über 50°C oder auch über 90°C aufweisen können und da die Herstellung von PU-Schäumen bevorzugt ausgehend von flüssigen Reaktionsmischungen erfolgt, kann es bevorzugt sein, die erfindungsgemäßen OH-funktionellen Verbindungen (OHV) in anderen Substanzen zu lösen und/oder die Temperatur der Ausgangsmaterialien entsprechend zu erhöhen, so dass alle Komponenten in flüssiger Form vorliegen und vorzugsweise eine Viskosität haben, die eine gute Verarbeitung ermöglicht.

Eine bevorzugte erfindungsgemäße Zusammensetzung enthält die folgenden Bestandteile
a) mindestens eine erfindungsgemäße OH-funktionelle Verbindung (OHV)
b) weitere isocyanat-reaktive Komponenten, insbesondere weitere Polyole
c) mindestens ein Polyisocyanat und/oder Polyisocyanat-Präpolmer
d) optional einen Katalysator, der die Reaktion von Polyolen a) und b) mit den Isocyanaten c) beschleunigt, bzw. steuert
e) optional eine silizium-haltige Verbindung als Surfactant
f) optional ein oder mehrere Treibmittel
g) optional weitere Additive, Füllstoffe, Flammschutzmittel, etc.
Dabei ist es bevorzugt, dass die Komponenten b) und d) zwingend enthalten sind.

Es entspricht einer bevorzugten Ausführungsform der Erfindung, wenn zur Herstellung der Polyurethanschäume eine Komponente mit mindestens 2 isocyanat-reaktiven Gruppen, bevorzugt eine Polyol-Komponente, ein Katalysator sowie ein Polyisocyanat und/oder ein Polyisocyanat-Präpolymer eingesetzt werden. Dabei wird der Katalysator insbesondere über die Polyol-Komponente eingebracht. Geeignete Polyol-Komponenten, Katalysatoren sowie Polyisocyanate und/oder Polyisocyanat-Präpolymere werden weiter unten beschrieben.

Eine weitere Ausführungsform der Erfindung ist die Herstellung von Zusammensetzungen zur Herstellung von PU-Schäumen, die nur einen Teil der Bestandteile a) bis g) enthält, insbesondere die Bestandteile a) bis g) außer die Isocyanaten c) enthält.

Die erfindungsgemäß einzusetzenden OH-funktionellen Verbindungen (OHV), in Gesamtmenge, können vorzugsweise in einem Massenanteil von 0,5 bis 100,0 Teilen (pphp), vorzugsweise 1 bis 95,0 Teilen, bevorzugt 2 bis 90 Teilen und besonders bevorzugt 5 bis 80 Teilen bezogen auf 100 Teile (pphp) Polyolkomponente eingesetzt werden, Polyole hier als Gesamtheit aller isocyanat-reaktiven Verbindungen.

In einer bevorzugten Ausführungsform der Erfindung werden die OH-funktionellen Verbindungen (OHV) in Massenanteilen von >30 bis 100,0 Teilen (pphp), vorzugsweise 35 bis 95,0 Teilen, bevorzugt 40 bis 90 Teilen bezogen auf 100 Teile (pphp) Polyolkomponente eingesetzt

Die erfindungsgemäß einzusetzenden OH-funktionellen Verbindungen (OHV) können demnach sowohl als Additiv in geringen Mengen als auch in großen Mengen zum Einsatz kommen, je nachdem welches Eigenschaftsprofil erwünscht ist.

Als Polyolkomponente b) geeignete Polyole im Sinne der vorliegenden Erfindung sind alle organischen Substanzen mit einer oder mehreren gegenüber Isocyanaten reaktiven Gruppen, vorzugsweise OH-Gruppen, sowie deren Zubereitungen. Bevorzugte Polyole sind alle zur Herstellung von Polyurethan-Systemen, insbesondere Polyurethan-Beschichtungen, Polyurethan-Elastomeren oder auch Schaumstoffen; üblicherweise verwendeten Polyetherpolyole und/oder Polyesterpolyole und/oder hydroxylgruppenhaltigen aliphatischen Polycarbonate, insbesondere Polyetherpolycarbonatpolyole und/oder Polyole natürlicher Herkunft, sogenannte "natural oil based polyols" (NOPs). Üblicherweise besitzen die Polyole eine Funktionalität von 1.8 bis 8 und zahlengemittelte Molekulargewichte im Bereich von 500 bis 15000. Üblicherweise kommen die Polyole mit OH-Zahlen im Bereich von 10 bis 1200 mg KOH/g zum Einsatz.

Zur Herstellung von offenzelligen PU-Hartschäumen kommen bevorzugt Polyole oder Mischungen davon zum Einsatz mit der Maßgabe, dass zumindest 10 Gew.-Teile, bevorzugt mindestens 20 Gew.-Teile, besonders bevorzugt mindestens 30 Gew.-Teile der enthaltenen Polyole bezogen auf 100 Gew.-Teile Polyolkomponente eine OH-Zahl größer 100, vorzugsweise größer 150, insbesondere größer 200 aufweisen.

Polyetherpolyole können nach bekannten Verfahren hergestellt werden, beispielsweise durch anionische Polymerisation von Alkylenoxiden in Gegenwart von Alkalihydroxiden, Alkalialkoholaten oder Aminen als Katalysatoren und unter Zusatz mindestens eines Startermoleküls, dass bevorzugt 2 oder 3 reaktive Wasserstoffatome gebunden enthält oder durch kationische Polymerisation von Alkylenoxiden in Gegenwart von Lewis-Säuren wie beispielsweise Antimonpentachlorid oder Bortrifluorid-Etherat oder durch Doppelmetallcyanidkatalyse. Geeignete Alkylenoxide enthalten 2 bis 4 Kohlenstoffatome im Alkylenrest. Beispiele sind Tetrahydrofuran, 1,3-Propylenoxid, 1,2- bzw. 2,3-Butylenoxid; vorzugsweise werden Ethylenoxid und 1,2-Propylenoxid eingesetzt. Die Alkylenoxide können einzeln, kumulativ, blockweise, alternierend nacheinander oder als Mischungen verwendet werden. Als Startmoleküle kommen insbesondere Verbindungen mit mindestens 2, vorzugsweise 2 bis 8 Hydroxylgruppen oder mit mindestens zwei primären Aminogruppen im Molekül zum Einsatz. Als Startermoleküle eingesetzt werden können z.B. Wasser, 2-, 3- oder 4-wertige Alkohole wie Ethylenglykol, Propandiol-1,2 und -1,3, Diethylenglykol, Dipropylenglykol, Glycerin, Trimethylolpropan, Pentaerythrit, Rizinusöl usw., höhere polyfunktionelle Polyole, insbesondere Zuckerverbindungen wie beispielsweise Glucose, Sorbit, Mannit und Saccharose, mehrwertige Phenole, Resole, wie z.B. oligomere Kondensationsprodukte aus Phenol und Formaldehyd und Mannich-Kondensate aus Phenolen, Formaldehyd und Dialkanolaminen sowie Melamin, oder Amine wie Anilin, EDA, TDA, MDA und PMDA, besonders bevorzugt TDA und PMDA. Die Wahl des geeigneten Startermoleküls ist abhängig von dem jeweiligen Anwendungsgebiet des resultierenden Polyetherpolyols bei der Polyurethanherstellung

Polyesterpolyole basieren auf Estern mehrwertiger aliphatischer oder aromatischer Carbonsäuren, bevorzugt mit 2 bis 12 Kohlenstoffatomen. Beispiele für aliphatische Carbonsäuren sind Bernsteinsäure, Glutarsäure, Adipinsäure, Korksäure, Azelainsäure, Sebacinsäure, Decandicarbonsäure, Maleinsäure und Fumarsäure. Beispiele für aromatische Carbonsäuren sind Phthalsäure, Isophthalsäure, Terephthalsäure und die isomeren Naphthalindicarbonsäuren. Die Polyesterpolyole werden durch Kondensation dieser mehrwertigen Carbonsäuren mit mehrwertigen Alkoholen, vorzugsweise von Diolen oder Triolen mit 2 bis 12, besonders bevorzugt mit 2 bis 6 Kohlenstoffatomen, bevorzugt Trimethylolpropan und Glycerin erhalten.

Gemäß einer bevorzugten Ausführungsform der Erfindung sind in der erfindungsgemäßen Zusammensetzung Polyesterpolyol(e) enthalten.

Polyetherpolycarbonatpolyole sind Polyole, welche Kohlenstoffdioxid als Carbonat gebunden enthalten. Da Kohlenstoffdioxid bei vielen Prozessen in der chemischen Industrie in großen Mengen als Nebenprodukt entsteht, ist die Verwendung von Kohlendioxid als Comonomer in Alkylenoxid-Polymerisationen aus kommerzieller Sicht von besonderem Interesse. Ein teilweiser Ersatz von Alkylenoxiden in Polyolen durch Kohlendioxid hat das Potential, die Kosten für die Herstellung von Polyolen deutlich zu senken. Außerdem ist die Verwendung von CO₂ als Comonomer ökologisch sehr vorteilhaft, da diese Reaktion die Umsetzung eines Treibhausgases zu einem Polymer darstellt. Die Herstellung von Polyetherpolycarbonatpolyolen durch Anlagerung von Alkylenoxiden und Kohlendioxid an H-funktionelle Startsubstanzen unter Verwendung von Katalysatoren ist seit langem bekannt. Verschiedene Katalysatorsysteme können hierbei zum Einsatz kommen: Die erste Generation stellten heterogene Zink- oder Aluminiumsalze dar, wie sie beispielsweise in US-A 3900424 oder US-A 3953383 beschrieben sind. Des Weiteren sind mono- und binukleare Metallkomplexe zur Copolymerisation von CO2 und Alkylenoxiden erfolgreich eingesetzt worden (WO 2010/028362, WO 2009/130470, WO 2013/022932 oder WO 2011/163133). Die wichtigste Klasse von Katalysatorsystemen für die Copolymerisation von Kohlenstoffdioxid und Alkylenoxiden stellen die Doppelmetallcyanidkatalysatoren, auch als DMC-Katalysatoren bezeichnet, dar (US-A 4500704, WO 2008/058913). Geeignete Alkylenoxide und H-funktionelle Startsubstanzen sind solche, die auch zur Herstellung von carbonatfreien Polyetherpolyolen - wie oben beschrieben - eingesetzt werden.

Polyole auf Basis nachwachsender Rohstoffe "Natural oil based polyols" (NOPs) zur Herstellung von Polyurethanschäumen sind mit Blick auf die langfristig begrenzte Verfügbarkeit fossiler Ressourcen, namentlich Öl, Kohle und Gas, und vor dem Hintergrund steigender Rohölpreise von zunehmendem Interesse und bereits vielfach in solchen Anwendungen beschrieben (WO 2005/033167; US 2006/0293400, WO 2006/094227, WO 2004/096882, US 2002/0103091, WO 2006/116456 und EP 1678232). Mittlerweile sind auf dem Markt eine Reihe dieser Polyole von verschiedenen Herstellern verfügbar (WO2004/020497, US2006/0229375, WO2009/058367). In Abhängigkeit vom Basis-Rohstoff (z.B. Sojabohnenöl, Palmöl oder Rizinusöl) und die daran angeschlossene Aufarbeitung ergeben sich Polyole mit unterschiedlichem Eigenschaftsbild. Hierbei können im Wesentlichen zwei Gruppen unterschieden werden: a) Polyole auf Basis nachwachsender Rohstoffe, die soweit modifiziert werden, dass sie zu 100 % zur Herstellung von Polyurethanen eingesetzt werden können (WO2004/020497, US2006/0229375); b) Polyole auf Basis nachwachsender Rohstoffe, die bedingt durch ihre Aufarbeitung und Eigenschaften nur zu einem gewissen Anteil das petrochemisch basierte Polyol ersetzen können (WO2009/058367).

Eine weitere Klasse von einsetzbaren Polyolen stellen die sogenannten Füllkörperpolyole (Polymerpolyole) dar. Diese zeichnen sich dadurch aus, dass sie feste organische Füllstoffe bis zu einem Feststoffgehalt von 40 % oder mehr in disperser Verteilung enthalten. Einsetzbar sind unter anderem SAN-, PHD- und PIPA-Polyole. SAN-Polyole sind hochreaktive Polyole, welche ein Copolymer auf der Basis von Styrol/Acrylnitril (SAN) dispergiert enthalten. PHD-Polyole sind hochreaktive Polyole, welche Polyharnstoff ebenfalls in dispergierter Form enthalten. PIPA-Polyole sind hochreaktive Polyole, welche ein Polyurethan, beispielsweise durch in situ-Reaktion eines Isocyanats mit einem Alkanolamin in einem konventionellen Polyol gebildet, in dispergierter Form enthalten.

Eine weitere Klasse von einsetzbaren Polyolen sind solche, die als Prepolymere durch Umsetzung von Polyol mit Isocyanat in einem Molverhältnis von vorzugsweise 100 zu 1 bis 5 zu 1, bevorzugt 50 zu 1 bis 10 zu 1, erhalten werden. Solche Prepolymere werden vorzugsweise gelöst in Polymer angesetzt, wobei das Polyol bevorzugt dem zur Herstellung der Prepolymeren eingesetzten Polyol entspricht.

Ein bevorzugtes Verhältnis von Isocyanat und Polyol, ausgedrückt als Index der Formulierung, d.h. als stöchiometrisches Verhältnis von Isocyanat-Gruppen zu gegenüber Isocyanat reaktiven Gruppen (z.B. OH-Gruppen, NH-Gruppen) multipliziert mit 100, liegt im Bereich von 10 bis 1000, bevorzugt 30 bis 350. Ein Index von 100 steht für ein molares Verhältnis der reaktiven Gruppen von 1 zu 1.

Als Isocyanatkomponenten c) werden vorzugsweise ein oder mehrere organische Polyisocyanate mit zwei oder mehr Isocyanat-Funktionen eingesetzt. Als Polyolkomponenten werden vorzugsweise ein oder mehrere Polyole mit zwei oder mehr gegenüber Isocyanat reaktiven Gruppen, eingesetzt.

Als Isocyanatkomponenten geeignete Isocyanate im Sinne dieser Erfindung sind alle Isocyanate, die mindestens zwei Isocyanat-Gruppen enthalten. Generell können alle an sich bekannten aliphatischen, cycloaliphatischen, arylaliphatischen und vorzugsweise aromatischen mehrfunktionalen Isocyanate verwendet werden. Besonders bevorzugt werden Isocyanate in einem Bereich von 60 bis 200 mol% relativ zu der Summe der isocyanatverbrauchenden Komponenten eingesetzt.

Beispielhaft genannt werden können hier Alkylendiisocyanate mit 4 bis 12 Kohlenstoffatomen im Alkylenrest, wie 1,12-Dodecandiisocyanat, 2-Ethyltetramethylendiisocyanat-1,4, 2-Methylpentamethylendiisocyanat-1,5, Tetramethylendiisocyanat-1,4, und vorzugsweise Hexamethylendiisocyanat-1,6 (HMDI), cycloaliphatische Diisocyanate, wie Cyclohexan-1,3- und 1-4-diisocyanat sowie beliebige Gemische dieser Isomeren, 1-Isocyanato-3,35-trimethyl-5-isocyanatomethylcyclohexan (Isophorondiisocyanat oder kurz IPDI), 2,4- und 2,6-Hexahydrotoluylendiisocyanat sowie die entsprechenden Isomerengemische, und vorzugsweise aromatische Di- und Polyisocyanate, wie beispielsweise 2,4- und 2,6-Toluoldiisocyanat (TDI) und die entsprechenden Isomerengemische, Naphthalindiisocyanat, Diethyltoluoldiisocyanat, Mischungen aus 2,4'- und 2,2'-Diphenylmethandiisocyanaten (MDI) und Polyphenylpolymethylenpolyisocyanate (Roh-MDI) und Mischungen aus Roh-MDI und Toluoldiisocyanaten (TDI). Die organischen Di- und Polyisocyanate können einzeln oder in Form ihrer Mischungen eingesetzt werden. Ebenso können entsprechende "Oligomere" der Diisocyanate eingesetzt werden (IPDI-Trimer auf basis Isocyanurat, Biurete- Urethdione.) Des Weiteren ist der Einsatz von Präpolymeren auf Basis der oben genannten Isocyanate möglich.

Es ist auch möglich, Isocyanate einzusetzen, die durch den Einbau von Urethan-, Uretdion-, Isocyanurat-, Allophanat- und anderen Gruppen modifiziert wurden, sogenannte modifizierte Isocyanate.

Besonders geeignete organische Polyisocyanate und daher besonders bevorzugt angewendet werden verschiedene Isomere des Toluoldiisocyanat (2,4- und 2,6-Toluoldiisocyanat (TDI), in reiner Form oder als Isomerengemische unterschiedlicher Zusammensetzung), 4,4'-Diphenylmethandiisocyanat (MDI), das so genannte "crude MDI" oder "polymere MDI" (enthält neben dem 4,4'- auch die 2,4'- und 2,2'-Isomeren des MDI und höherkernige Produkte) sowie das als "pure MDI" bezeichnete zweikernige Produkt aus überwiegend 2,4'- und 4,4'-Isomerengemischen bzw. deren Prepolymeren. Beispiele für besonders geeignete Isocyanate sind beispielsweise in EP 1712578, EP 1161474, WO 00/58383, US 2007/0072951, EP 1678232 und der WO 2005/085310 aufgeführt, auf die hier in vollem Umfang Bezug genommen wird.

### d) Katalysatoren

Geeignete Katalysatoren d) im Sinne der vorliegenden Erfindung sind alle Verbindungen, die in der Lage sind die Reaktion von Isocyanaten mit OH- Funktionen, NH-Funktionen oder anderen isocyanat-reaktiven Gruppen zu beschleunigen. Hierbei kann auf die üblichen aus dem Stand der Technik bekannten Katalysatoren zurückgegriffen werden, umfassend z.B. Amine (cyclische, acyclische; Monoamine, Diamine, Oligomere mit einer oder mehreren Aminogruppen), metallorganische Verbindungen und Metallsalze, vorzugsweise die des Zinn, Eisen, Wismut und Zink. Insbesondere können als Katalysatoren Gemische mehrerer Komponenten eingesetzt werden.

Komponente e) können oberflächenaktive siliziumhaltige Verbindungen sein die als Additiv dienen, um die gewünschte Zellstruktur und den Verschäumungsprozess zu optimieren. Daher werden solche Additive auch Schaumstabilisatoren genannt. Hierbei können im Rahmen dieser Erfindung alle Si-haltigen Verbindungen eingesetzt werden, die die Schaumherstellung unterstützen (Stabilisierung, Zellregulierung, Zellöffnung, etc.). Diese Verbindungen sind aus dem Stand der Technik hinreichend bekannt.

Als oberflächenaktive Si-haltige Verbindungen können alle bekannten Verbindungen eingesetzt werden, die zur Herstellung von PU-Schaum geeignet sind.

Entsprechende, im Sinne dieser Erfindung einsetzbare Siloxanstrukturen werden z.B. in den folgenden Patentschriften beschrieben, wobei dort die Verwendung allerdings nur in klassischen Polyurethanschäumen, als Formschaum, Matratze, Isolationsmaterial, Bauschaum, etc., beschrieben ist:
CN 103665385, CN 103657518, CN 103055759, CN 103044687, US 2008/ 0125503, US 2015/0057384, EP 1520870 A1, EP 1211279, EP 0867464, EP 0867465, EP 0275563. Diese vorgenannten Schriften werden hiermit als Referenz eingeführt und gelten als Teil des Offenbarungsgehaltes der vorliegenden Erfindung.

Gemäß einer weiteren bevorzugten Ausführungsform der Erfindung zeichnet sich die erfindungsgemäße Verwendung dadurch aus, dass die Gesamtmenge der optional eingesetzten siliziumhaltigen Verbindung(en) so bemessen ist, dass der Massenanteil bezogen auf das fertige Polyurethan 0,01 bis 10 Gew.-%, bevorzugt 0,1 bis 3 Gew.-% beträgt.

Die Verwendung von Treibmitteln f) ist optional, je nachdem welches Verschäumungsverfahren verwendet wird. Es kann mit chemischen und physikalischen Treibmitteln gearbeitet werden. Die Wahl des Treibmittels hängt hier stark von der Art des Systems ab.

Je nach Menge des verwendeten Treibmittels wird ein Schaum mit hoher oder niedriger Dichte hergestellt. So können Schäume mit Dichten von 3 kg/m³ bis 300 kg/m³ hergestellt werden. Bevorzugte Dichten sind 4 bis 250, besonders bevorzugt 5 bis 200 kg/m³, insbesondere 7 bis 150 kg/m³. Besonders bevorzugte offenzellige PU-Hartschäume weisen im Rahmen dieser Erfindung Dichten von ≤ 25 kg/m³, bevorzugt ≤ 20 kg/m³, besonders bevorzugt ≤ 15 kg/m³, insbesondere ≤ 10 kg/m³ auf.

Als physikalische Treibmittel können entsprechende Verbindung mit passenden Siedepunkten eingesetzt werden. Ebenso können chemische Treibmittel eingesetzt werden, die mit NCO-Gruppen und Freisetzung von Gase reagieren, wie beispielsweise Wasser oder Ameisensäure. Beispiele für Treibmittel sind verflüssigtes CO₂, Stickstoff, Luft, leichtflüchtige Flüssigkeiten, beispielsweise Kohlenwasserstoffe mit 3, 4 oder 5 Kohlenstoff-Atomen, bevorzugt cyclo-, iso- und n-Pentan, Fluorkohlenwasserstoffe, bevorzugt HFC 245fa, HFC 134a und HFC 365mfc, Fluorchlorkohlenwasserstoffe, bevorzugt HCFC 141b, Hydrofluoroolefine (HFO) oder Hydrohaloolefine wie z.B. 1234ze, 1233zd(E) oder 1336mzz, Sauerstoffhaltige Verbindungen wie Methylformiat, Aceton und Dimethoxymethan, oder Chlorkohlenwasserstoffe, bevorzugt Dichlormethan und 1,2-Dichlorethan. Bevorzugt werden bei offenzelligen PU-Hartschäumen keine physikalischen Treibmittel verwendet, da diese nach dem Aufschäumen nicht im Schaum verbleiben sondern schlicht verdampfen würden.

Als Zusatzstoffe g) können alle nach dem Stand der Technik bekannten Substanzen verwendet werden, die bei der Herstellung von Polyurethanen, insbesondere von Polyurethanschaumstoffen, Verwendung finden, wie zum Beispiel Vernetzer und Kettenverlängerer, Stabilisatoren gegen oxidativen Abbau (so genannte Antioxidantien), Flammschutzmittel, Tenside, Biozide, zellverfeinernde Additive, Zellöffner, feste Füllstoffe, Antistatik-Additive, Nukleierungsmittel, Verdicker, Farbstoffe, Pigmente, Farbpasten, Duftstoffe, Emulgatoren, usw.

Als Flammschutzmittel kann die erfindungsgemäße Zusammensetzung alle bekannten und zur Herstellung von Polyurethan-Schäumen geeigneten Flammschutzmittel aufweisen. Geeignete Flammschutzmittel im Sinne dieser Erfindung sind bevorzugt flüssige organische Phosphor-Verbindungen, wie halogenfreie organische Phosphate, z.B. Triethylphosphat (TEP), halogenierte Phosphate, z.B. Tris(1-chlor-2-propyl)phosphat (TCPP) und Tris(2-chlorethyl)phosphat (TCEP) und organische Phosphonate, z.B. Dimethylmethanphosphonat (DMMP), Dimethylpropanphosphonat (DMPP), oder Feststoffe wie Ammoniumpolyphosphat (APP) und roter Phosphor. Des Weiteren sind als Flammschutzmittel halogenierte Verbindungen, beispielsweise halogenierte Polyole, sowie Feststoffe, wie Blähgraphit, Aluminiumoxide, Antimon-Verbindungen und Melamin, geeignet. Der erfindungsgemäße Einsatz der OH-funktionellen Verbindungen (OHV) ermöglicht den Einsatz sehr hoher Mengen an Flammschutzmittel, insbesondere auch flüssiger Flammschutzmittel, wie z.B. TEP, TCPP, TCEP, DMMP, was mit herkömmlichen Polyolen zu sehr instabilen Formulierungen führt. Der erfindungsgemäße Einsatz der OH-funktionellen Verbindungen (OHV) ermöglicht sogar den Einsatz von Flammschutzmittel in Massenanteilen von vorteilhafterweise ≥ 30 pphp, vorzugsweise ≥50 pphp ,insbesondere ≥100 pphp, bezogen auf 100 Teile (pphp) Polyolkomponente, Polyole hier als Gesamtheit aller isocyanat-reaktiven Verbindungen. Solche Mengen führen sonst zu sehr instabilen Formulierungen, der erfindungsgemäße Einsatz der OH-funktionellen Verbindungen (OHV) ermöglicht es aber, diese Mengen einzusetzen.

Ein weiterer Gegenstand der Erfindung ist ein Verfahren zur Herstellung von Polyurethanschaum, insbesondere von offenzelligem Polyurethanhartschaum, durch Umsetzung einer oder mehrerer Polyolkomponenten mit einer oder mehrerer Isocyanatkomponenten, wobei die Umsetzung in Gegenwart von mindestens einer OH-funktionellen Verbindung (OHV) erfolgt, erhältlich durch die teilweise oder vollständige Hydrierung von Keton-Aldehydharzen, wobei diese OH-funktionelle Verbindung mindestens ein Strukturelement der Formel (1a) sowie optional der Formeln (1 b) und/oder (1c) enthält, 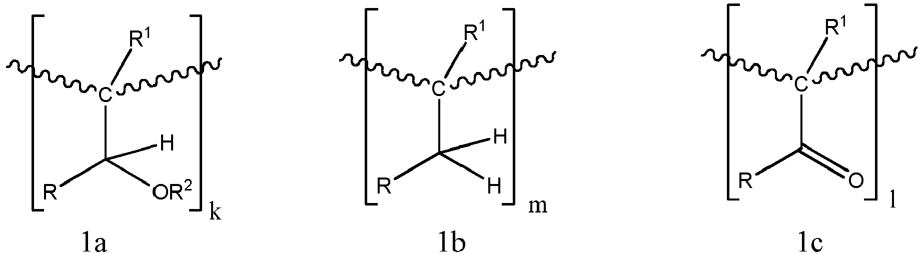 mit
R = aromatischer Kohlenwasserstoffrest mit 6-14 Kohlenstoffatomen oder (cyclo)aliphatischer Kohlenwasserstoffrest mit 1-12 Kohlenstoffatomen, wobei die Kohlenwasserstoffreste ggf. substituiert sein können z.B. mit Heteroatomen, Halogen etc.
R¹ = H, CH₂OH,
R² = H, oder ein Rest der Formel -(CH₂-CH(R')O-)_{y}-H
mit R' gleich Wasserstoff, Methyl, Ethyl oder Phenyl und y = 1 bis 50,
k = 2 bis 15, bevorzugt 3 bis 12, besonders bevorzugt 4 bis 11
m = 0 bis 13, bevorzugt 0 bis 9
l = 0 bis 2
wobei die Summe aus k+l+m zwischen 5 und 15, vorzugsweise zwischen 5 und 12 liegt und k > m ist, mit der Maßgabe, dass zumindest 10 Gew.-Teile, bevorzugt mindestens 20 Gew.-Teile, besonders bevorzugt mindestens 30 Gew.-Teile der eingesetzten Polyole bezogen auf 100 Gew.-Teile Polyolkomponente eine OH-Zahl größer 100, vorzugsweise größer 150, insbesondere größer 200 aufweisen.

Die erfindungsgemäß herzustellenden Schäume weisen Dichten von vorzugsweise 3 kg/m³ bis 300 kg/m³, bevorzugt 4 bis 250, besonders bevorzugt 5 bis 200 kg/m³, insbesondere 7 bis 150 kg/m³ auf. Insbesondere können offenzellige Schäume erhalten werden. Besonders bevorzugte offenzellige PU-Hartschäume weisen im Rahmen dieser Erfindung Dichten von ≤ 25 kg/m³, bevorzugt ≤ 20 kg/m³, besonders bevorzugt ≤ 15 kg/m³, insbesondere ≤ 10 kg/m³ auf. Diese niedrigen Schaumdichten werden ofmals in Sprühschäumen angestrebt.

Die Bestimmung der Geschlossenzelligkeit und damit der Offenzelligkeit erfolgt im Sinne dieser Erfindung vorzugsweise nach DIN ISO 4590 per Pyknometer.

In der DIN 14315-1 werden diverse Spezifikationen für PU-Schaum, dort PU-Spritzschaum, auch Sprühschaum genannt, festgelegt. Hier werden die Schäume - neben anderen Parametern - auch nach ihrer Geschlossenzelligkeit eingeteilt.

| Stufe | Anteil an geschlossenen Zellen |
|---|---|
| CCC1 | < 20% |
| CCC2 | 20 bis 80% |
| CCC3 | > 80 bis 89% |
| CCC4 | ≥ 90% |

Generell werden mit eher geschlossenzelligen Schäumen (CCC3 und CCC4) bessere Lamda-Werte erzielt als mit eher offenzelligen Schäumen (CCC1 und CCC2). Während ein offenzelliger Schaum mit geringen Dichten herstellbar ist, benötigt in geschlossenzelliger Schaum eine höhere Dichte, damit die Polymermatrix stabil genug ist, um gegen den Atmosphärendruck standzuhalten.

Bevorzugte PU-Schäume im Sinne der vorliegenden Erfindung sind offenzellige PU-Hartschäume. Offenzellige PU-Hartschäume im Sinne dieser Erfindung weisen vorteilhafterweise einen Anteil an geschlossenen Zellen ≤ 50%, vorzugsweise ≤ 20% und insbesondere ≤ 10% auf, wobei die Bestimmung der Geschlossenzelligkeit im Sinne dieser Erfindung vorzugsweise nach DIN ISO 4590 per Pyknometer erfolgt. Damit fallen diese Schäume in die Kategorien CCC2 oder bevorzugt CCC1 entsprechend der Festlegung nach DIN 14315-1.

Die vorliegende Erfindung ermöglicht es vorteilhafterweise, die Festigkeit der Polymermatrix eines PU-Schaums zu erhöhen. Dies kann in verschiedenen Schaumtypen sinnvoll sein. Bei allen Schaum-Typen kann die Stauchhärte (bestimmbar DIN 53421) erhöht werden. Bei offenzelligen PU-Schäumen kann man die Dichten erniedrigen ohne schlechtere Stauchhärten in Kauf nehmen zu müssen. Bevorzugte offenzellige PU-Schäume im Sinne dieser Erfindung können Dichten von kleiner 25 kg/m³, bevorzugt kleiner 20 kg/m³, besonders bevorzugt kleiner 15 kg/m³, insbesondere kleiner 10 kg/m³ haben, was einer besonders bevorzugten Ausführungsform dieser Erfindung entspricht.

Das erfindungsgemäße Verfahren zur Herstellung von PU-Schäumen, insbesondere offenzelligen PU-Hartschäumen, kann nach den bekannten Methoden durchgeführt werden, beispielsweise im Handmischverfahren oder bevorzugt mit Hilfe von Verschäumungsmaschinen. Wird das Verfahren mittels Verschäumungsmaschinen durchgeführt, können Hochdruck- oder Niederdruckmaschinen verwendet werden. Das erfindungsgemäße Verfahren kann sowohl diskontinuierlich als auch kontinuierlich durchgeführt werden.

Eine bevorzugte Polyurethan- bzw. Polyisocyanurat-Hartschaumformulierung im Sinne dieser Erfindung ergibt ein Raumgewicht von 3 bis 300 kg/m³ und hat die in Tabelle 1 genannte Zusammensetzung.

**Tabelle 1: Zusammensetzung einer bevorzugten Polyurethan- bzw. Polyisocyanurat-Hartschaumformulierung**

| Komponente | Gewichtsanteil |
|---|---|
| Erfindungsgemäße OH-funktionellen Verbindung (OHV) | 0,1 bis 100 |
| Polyol | >0 bis 99,9 |
| Amin-Katalysator | 0 bis 5 |
| Metall-Katalysator | 0 bis 10 |
| Polyethersiloxan | 0 bis 5 |
| Wasser | 0,01 bis 40 |
| Treibmittel | 40 |
| Weitere Additive (Flammschutzmittel etc.) | 0 bis 300 |
| | |
| Isocyanat-Index: 10 bis 1000 | |

Für weitere bevorzugte Ausführungsformen und Ausgestaltungen des erfindungsgemäßen Verfahrens sei außerdem auf die zuvor bereits im Zusammenhang mit der erfindungsgemäßen Zusammensetzung gemachten Ausführungen verwiesen.

Ein weiterer Gegenstand der Erfindung ist ein Polyurethanschaum, vorzugsweise offenzelliger PU-Hartschaum, erhältlich durch das genannte Verfahren.

Gemäß einer bevorzugten Ausführungsform der Erfindung handelt es sich um einen offenzelligen PU-Sprühschaum (Anteil an geschlossenen Zellen vorzugsweise < 20%) hergestellt mit Raumgewichten von kleiner 25 kg/ m³, bevorzugt kleiner 20 kg/ m³, besonders bevorzugt kleiner 15 kg/ m³.

Gemäß einer bevorzugten Ausführungsform handelt es sich um einen Polyurethanhartschaum, dessen Raumgewicht von 4 bis 250 kg/m³, vorzugsweise von 5 bis 200 kg/m³ beträgt.

Gemäß einer weiteren bevorzugten Ausführungsform der Erfindung weist der Polyurethanschaum ein Raumgewicht von 3 kg/m³ bis 300 kg/m³, bevorzugt 4 bis 250, besonders bevorzugt 5 bis 200 kg/m³, insbesondere 7 bis 150 kg/m³ auf und die Geschlossenzelligkeit beträgt vorteilhafterweise ≤ 50 %, vorzugsweise ≤ 20 %.

Gemäß einer bevorzugten Ausführungsform der Erfindung weist der Polyurethanschaum 0,1 bis 60 Massen-%, bevorzugt 0,2 bis 40 Massen-%, weiter bevorzugt 0,5 bis 30 Massen% und besonders bevorzugt von 1 bis 20 Massen-% an OH-funktionellen Verbindungen (OHV) auf.

Die erfindungsgemäßen Polyurethanschäume zeichnen sich vorteilhafterweise dadurch aus, dass sie mindestens eine erfindungsgemäße OH-funktionellen Verbindung (OHV), die mindestens ein Strukturelement der Formel (1a), wie oben definiert, aufweisen und vorzugsweise durch das erfindungsgemäße Verfahren erhältlich sind.

Die erfindungsgemäßen PU-Schäume (Polyurethan- oder Polyisocyanuratschaumstoffe) können als oder zur Herstellung von Isoliermaterialien, vorzugsweise offenzelliger Sprühschaum, Dämmplatten, Akustik-Schäume zur Schallabsorption, Verpackungsschaum, Dachhimmel für Automombile oder Rohrummantelungen für Tiefsee-Röhren verwendet werden.

Insbesondere in der Anwendung zur Isolation von Gebäuden, als offenzelliger Sprühschaum können die erfindungsgemäßen PU-Schäume mit Vorteil eingesetzt werden.

Ein weiterer Gegenstand der Erfindung liegt in der Verwendung von OH-funktionellen Verbindungen (OHV), erhältlich durch die teilweise oder vollständige Hydrierung von Keton-Aldehydharzen, wobei die OH-funktionelle Verbindung mindestens ein Strukturelement der Formel (1a) sowie optional der Formeln (1b) und/oder (1c) enthält, 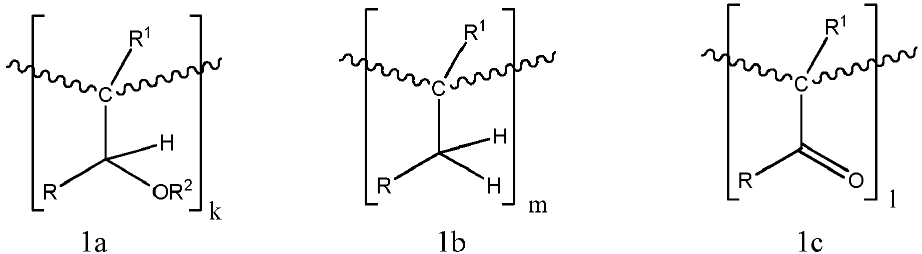 mit
R = aromatischer Kohlenwasserstoffrest mit 6-14 Kohlenstoffatomen oder (cyclo)aliphatischer Kohlenwasserstoffrest mit 1-12 Kohlenstoffatomen, wobei die Kohlenwasserstoffreste ggf. substituiert sein können z.B. mit Heteroatomen, Halogen etc.,
R¹ = H, CH₂OH,
R² = H, oder ein Rest der Formel -(CH₂-CH(R')O-)_{y}-H
mit R' gleich Wasserstoff, Methyl, Ethyl oder Phenyl und y = 1 bis 50,
k = 2 bis 15, bevorzugt 3 bis 12, besonders bevorzugt 4 bis 11
m = 0 bis 13, bevorzugt 0 bis 9
l = 0 bis 2
wobei die Summe aus k+l+m zwischen 5 und 15, vorzugsweise zwischen 5 und 12 liegt und k > m ist, bei der Herstellung von PU-Schäumen, insbesondere offenzelligen PU-Hartschäumen, insbesondere zur Verbesserung der Stauchhärte bei der Herstellung von offenzelligen PU-Hartschäumen,
insbesondere mit der Maßgabe, dass zumindest 10 Gew.-Teile (bevorzugt mindestens 20 Gew.-Teile, besonders bevorzugt mindestens 30 Gew.-Teile) der eingesetzten Polyole bezogen auf 100 Gew.-Teile Polyolkomponente eine OH-Zahl größer 100, vorzugsweise größer 150, insbesondere größer 200 aufweisen.

Außerdem ermöglicht der erfindungsgemäße Einsatz der OH-funktionellen Verbindungen (OHV) den Einsatz sehr hoher Mengen an Flammschutzmittel, was mit herkömmlichen Polyolen zu sehr instabilen Formulierungen führt.

Die erfindungsgemäßen Gegenstände werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Bei Prozentangaben handelt es sich, wenn nicht anders angegeben, um Angaben in Gewichtsprozent. Werden nachfolgend Mittelwerte angegeben, so handelt es sich, wenn nicht anderes angegeben, um Gewichtsmittel. Werden nachfolgend Parameter angegeben, die durch Messung bestimmt wurden, so wurden die Messungen, wenn nicht anders angegeben, bei einer Temperatur von 25 °C und einem Druck von 101.325 Pa durchgeführt.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele

### Verwendete Materialien

Erfindungsgemäße OH-funktionelle Verbindungen (OHV) wurden hergestellt nach den in DE 102007018812 beschriebenen Verfahren. OHV-1 entspricht dem in DE 102007018812 beschriebenen "Carbonylhydriertes Keton-Aldehydharz Nr. II".

1200 g Acetophenon, 220 g Methanol, 0,3 g Benzyltributylammoniumchlorid und 360 g einer 30%igen, wässrigen Formaldehydlösung werden vorgelegt und unter Rühren homogenisiert. Sodann erfolgte unter Rühren die Zugabe von 32 g einer 25%igen, wässrigen Natronlaugelösung. Bei 80 bis 85°C erfolgte dann unter Rühren die Zugabe von 655 g einer 30%igen, wässrigen Formaldehydlösung über 90 min. Der Rührer wurde nach 5 h Rühren bei Rückflusstemperatur abgestellt und die wässrige Phase von der Harzphase separiert. Das Rohprodukt wurde mit essigsaurem Wasser gewaschen, bis eine Schmelzprobe des Harzes klar erscheint. Dann wurde das Harz durch Destillation getrocknet. Es wurden 1270 g eines leicht gelblichen Harzes erhalten. Das Harz war klar und spröde und hatte einen Schmelzpunkt von 72°C. Die Farbzahl nach Gardner betrug 0,8 (50%ig in Ethylacetat). Der Formaldehydgehalt lag bei 35 ppm. Dieses Produkt wird als Grundharz bezeichnet.

300 g des Grundharzes wurden in 700 g Tetrahydrofuran (Wassergehalt ca. 7%) gelöst. Sodann erfolgte die Hydrierung bei 260 bar und 120°C in einem Autoklaven (Fa. Parr) mit Katalysatorkorb, der mit 100 mL eines handelsüblichen Ru-Katalysators (3% Ru auf Aluminiumoxid) gefüllt war. Nach 20 h wurde die Reaktionsmischung über ein Filter aus dem Reaktor abgelassen.

Die Reaktionsmischung wurde im Vakuum vom Lösemittel befreit. Es resultierte die erfindungsgemäße OH-funktionelle Verbindung OHV-1 mit einer OH-Zahl von 325 mg KOH/g.

Als Si-Surfactant wurde das folgende Material eingesetzt.
Siloxan 1: Polyethersiloxan, wie in EP 1 520870A1 in Beispiel 1
R 251: Daltolac R 251, Polyetherpolyol der Firma Huntsman
R 471: Daltolac R 471, Polyetherpolyol der Firma Huntsman
Voranol CP 3322: Polyetherpolyol der Firma Dow
TCPP: Tris(2-chlorisopropyl)phosphat der Firma Fyrol
DABCO NE 310 von Evonik, Amin- Katalysator
MDI (44V20): Desmodur 44V20L der Fa. Bayer Materialscience, Diphenylmethan-4,4'-diisocyanat (MDI) mit Isomeren und höherfunktionellen Homologen

### Schaumdichtebestimmung

Zur Bestimmung der Schaumdichte wurden aus den Schäumen Probekörper mit den Abmessungen (10x10x10 cm- also 1 Liter Volumen) geschnitten. Diese wurden gewogen um die Massen zu bestimmen und die Dichten zu berechnen.

### Beispiele: Herstellung von PU Schäumen

Die Durchführung der Verschäumungen erfolgte im Handmischverfahren. Dazu wurden die erfindungsgemäßen Verbindungen, Polyole, Flammschutzmittel, Katalysatoren, Wasser, konventioneller bzw. erfindungsgemäßer Schaumstabilisator und Treibmittel in einen Becher eingewogen und mit einem Tellerrührer (6 cm Durchmesser) 30 s bei 1000 Upm vermischt. Anschließend wurde das Isocyanat (MDI) zugegeben, die Reaktionsmischung mit dem beschriebenen Rührer 5 s bei 3000 Upm verrührt. Das Gemisch wurde in mit Papier ausgekleidete Kisten der Grundfläche von 27 x 14 cm überführt.

Die Stauchhärten der Schaumstoffe wurden an würfelförmigen Probekörpern mit 5 cm Kantenlänge nach DIN 53421 bis zu einer Stauchung von 10% gemessen (angegeben ist die in diesem Messbereich maximal aufgetretene Druckspannung).

In Tabellen 2 sind Ergebnisse mit frei gestiegenen Schäumen (Kisten) zusammengefasst. Hierbei sind die mit "-Vgl." versehenen Beispiele die nicht erfinderischen Vergleichsbeispiele. Es sind hier zusammengefasst: Die zur Herstellung der Schäume verwendeten Rezepturen , die Dichten der Probekörper (mit Abmessung von 10x10x10 cm) sowie die Stauchhärten - gemessen in vertikaler und horizontalter Richtung

### Beispiele zur Verbesserung der Stauchhärte

**Tabelle 2**

| Beispiel Formulierung | 1,2-Vgl. | 1 | 2 | 3,4-Vgl. | 3 | 4 | 5,6-Vgl. | 5 | 6 |
|---|---|---|---|---|---|---|---|---|---|
| Daltolac R 251 | 9,5 | | 4,0 | 8,2 | | 3,4 | 6,9 | | 2,9 |
| Daltolac R 471 | 5,0 | | 7,6 | 4,3 | | 6,6 | 3,6 | | 5,5 |
| Voranol CP 3322 | 2,3 | 2,3 | 2,3 | 2 | 2 | 2 | 1,7 | 1,7 | 1,7 |
| OHV-1 | | 14,5 | 2,9 | | 12,5 | 2,5 | | 10,5 | 2,1 |
| TCPP | 45 | 45 | 45 | 45 | 45 | 45 | 45 | 45 | 45 |
| DABCO NE 310 | 3,0 | 3,0 | 3,0 | 3,0 | 3,0 | 3,0 | 3,0 | 3,0 | 3,0 |
| Siloxan 1 | 3 | 3 | 3 | 3 | 3 | 3 | 3 | 3 | 3 |
| Wasser | 15 | 15 | 15 | 15 | 15 | 15 | 15 | 15 | 15 |
| MDI (44V20) | 141 | 141 | 141 | 141 | 141 | 141 | 141 | 141 | 141 |
| <*Index*> | *60* | *60* | *60* | *60* | *60* | *60* | *60* | *60* | *60* |
| *Dichte in kg*/*m³* | *8,3* | *8,8* | *9,3* | *8,3* | *9,2* | *8,6* | *8,3* | *9,8* | *9,1* |
| *Stauchhärte in kPa* | *4,4* | *11,1* | *5,5* | *5,7* | *10,6* | *6,6* | *5,7* | *12,9* | *6,2* |
| *Offenzelligkeit in %* | > *90* | > *90* | > *90* | > *90* | > *90* | > *90* | > *90* | > *90* | > *90* |

Die Beispiele 1 bis 6 zeigen, dass bei Verwendung der erfindungsgemäßen Verbindungen im Vergleich zu kommerziell erhältlichen Polyolen mit vergleichbaren OH-Zahlen höhere Stauchhärten in den Schäumen erzielt werden konnten ohne dass die Dichten erhöht werden mussten. Die erfindungsgemäßen Verbindungen können auch teilweise die kommerziellen Polyole ersetzen und dabei eine deutliche Erhöhung der Stauchhärte erzielen. Hierbei ist besonders interessant, dass die erhöhte Schaumhärte ohne eine Steigerung des Index oder der Isocyanatmenge erreicht werden konnte.

## Patentansprüche

1. Zusammensetzung, geeignet zur Herstellung von Polyurethanschäumen, insbesondere offenzelligem Polyurethanhartschaum, umfassend zumindest eine Isocyanat-Komponente, eine Polyolkomponente, optional einen Katalysator, der die Ausbildung einer Urethan- oder Isocyanurat-Bindung katalysiert, optional Treibmittel,
wobei die Zusammensetzung zusätzlich mindestens eine OH-funktionelle Verbindung (OHV) aufweist, erhältlich durch die teilweise oder vollständige Hydrierung von Keton-Aldehydharzen, wobei diese OH-funktionelle Verbindung mindestens ein Strukturelement der Formel (1a) sowie optional der Formeln (1b) und/oder (1c) enthält, 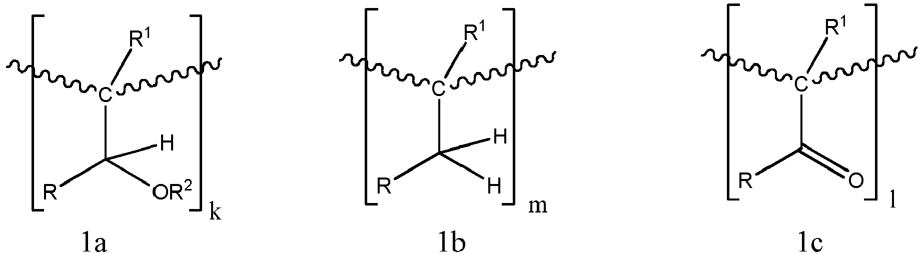 mit
R = aromatischer Kohlenwasserstoffrest mit 6-14 Kohlenstoffatomen oder (cyclo)aliphatischer Kohlenwasserstoffrest mit 1-12 Kohlenstoffatomen, wobei die Kohlenwasserstoffreste ggf. substituiert sein können,
R¹ = H, CH₂OH,
R² = H, oder ein Rest der Formel -(CH₂-CH(R')O-)_{y}-H
mit R' gleich Wasserstoff, Methyl, Ethyl oder Phenyl und y = 1 bis 50,
k = 2 bis 15, bevorzugt 3 bis 12, besonders bevorzugt 4 bis 11
m = 0 bis 13, bevorzugt 0 bis 9
l = 0 bis 2
wobei die Summe aus k+l+m zwischen 5 und 15, vorzugsweise zwischen 5 und 12 liegt und k > m ist, mit der Maßgabe, dass zumindest 10 Gew.-Teile der enthaltenen Polyole bezogen auf 100 Gew.-Teile Polyolkomponente eine OH-Zahl größer 100, vorzugsweise größer 150, insbesondere größer 200 aufweisen.

2. Zusammensetzung nach Anspruch 1, **dadurch gekennzeichnet, dass** die OH-funktionelle Verbindung (OHV) in Gesamtmenge in einem Massenanteil von 0,1 bis 90,0 Teilen, bevorzugt 0,5 bis 80 Teilen und besonders bevorzugt 1 bis 70 Teilen bezogen auf 100 Teile Polyolkomponente enthalten ist.

3. Zusammensetzung nach einem der Ansprüche 1 oder 2, **dadurch gekennzeichnet, dass** weiterhin Polyesterpolyole enthalten sind.

4. Verfahren zur Herstellung von Polyurethanhartschaum, vorzugsweise offenzelligem PU-Hartschaum, durch Umsetzung einer oder mehrerer Polyolkomponenten mit einer oder mehrerer Isocyanatkomponenten, **dadurch gekennzeichnet, dass** die Umsetzung in Gegenwart von mindestens einer OH-funktionellen Verbindung (OHV) erfolgt, erhältlich durch die teilweise oder vollständige Hydrierung von Keton-Aldehydharzen, wobei diese OH-funktionelle Verbindung mindestens ein Strukturelement der Formel (1a) sowie optional der Formeln (1b) und/oder (1c) enthält, 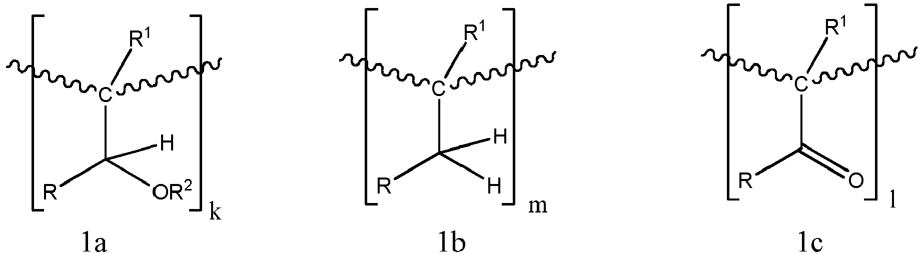 mit
R = aromatischer Kohlenwasserstoffrest mit 6-14 Kohlenstoffatomen oder (cyclo)aliphatischer Kohlenwasserstoffrest mit 1-12 Kohlenstoffatomen, wobei die Kohlenwasserstoffreste ggf. substituiert sein können,
R¹ = H, CH₂OH,
R² = H, oder ein Rest der Formel -(CH₂-CH(R')O-)_{y}-H
mit R' gleich Wasserstoff, Methyl, Ethyl oder Phenyl und y = 1 bis 50,
k = 2 bis 15, bevorzugt 3 bis 12, besonders bevorzugt 4 bis 11
m = 0 bis 13, bevorzugt 0 bis 9
l = 0 bis 2
wobei die Summe aus k+l+m zwischen 5 und 15, vorzugsweise zwischen 5 und 12 liegt und k > m ist, mit der Maßgabe, dass zumindest 10 Gew.-Teile der eingesetzten Polyole bezogen auf 100 Gew.-Teile Polyolkomponente eine OH-Zahl größer 100, vorzugsweise größer 150, insbesondere größer 200 aufweisen.

5. Polyurethanhartschaum, vorzugsweise offenzelliger Polyurethanhartschaum, erhältlich durch ein Verfahren nach Anspruch 4.

6. Polyurethanhartschaum nach Anspruch 5, **dadurch gekennzeichnet, dass** das Raumgewicht von 3 bis 300 kg/m³, vorzugsweise 4 bis 250, weiter bevorzugt 5 bis 200 kg/m³, insbesondere 7 bis 150 kg/m³ beträgt.

7. Polyurethanhartschaum nach Anspruch 5 oder 6, **dadurch gekennzeichnet, dass** die Geschlossenzelligkeit ≤ 50 %, vorzugsweise ≤ 25 %, insbesondere ≤ 10 % beträgt, wobei die Geschlossenzelligkeit bestimmt wird nach DIN ISO 4590.

8. Polyurethanschaum nach einem der Ansprüche 5 bis 7, **dadurch gekennzeichnet, dass** er 0,1 bis 60 Massen-%, bevorzugt 0,2 bis 40 Massen-%, weiter bevorzugt 0,5 bis 30 Massen% und besonders bevorzugt von 1 bis 20 Massen-% an OH-funktionellen Verbindungen (OHV) aufweist.

9. Verwendung des Schaums nach einem der Ansprüche 6 bis 8 zur Herstellung von Isoliermaterialien, vorzugsweise als offenzelliger Sprühschaum, für Dämmplatten, als Akustik-Schäume zur Schallapsorbtion, als Verpackungsschaum, als Dachhimmel für Automombile oder Rohrummantelungen für Tiefsee-Röhren.

10. Verwendung von OH-funktionellen Verbindungen (OHV), erhältlich durch die teilweise oder vollständige Hydrierung von Keton-Aldehydharzen, wobei die OH-funktionelle Verbindung mindestens ein Strukturelement der Formel (1a) sowie optional der Formeln (1b) und/oder (1c) enthält, 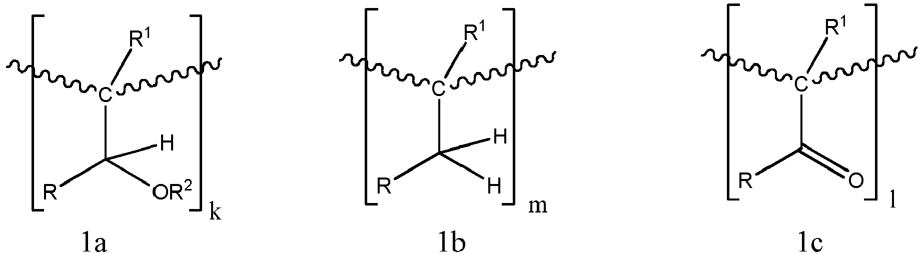 mit
R = aromatischer Kohlenwasserstoffrest mit 6-14 Kohlenstoffatomen oder (cyclo)aliphatischer Kohlenwasserstoffrest mit 1-12 Kohlenstoffatomen, wobei die Kohlenwasserstoffreste ggf. substituiert sein können,
R¹ = H, CH₂OH,
R² = H, oder ein Rest der Formel -(CH₂-CH(R')O-)_{y}-H
mit R' gleich Wasserstoff, Methyl, Ethyl oder Phenyl und y = 1 bis 50,
k = 2 bis 15, bevorzugt 3 bis 12, besonders bevorzugt 4 bis 11
m = 0 bis 13, bevorzugt 0 bis 9
l = 0 bis 2
wobei die Summe aus k+l+m zwischen 5 und 15, vorzugsweise zwischen 5 und 12 liegt und k > m ist, bei der Herstellung von PU-Hartschäumen, vorzugsweise offenzelligem PU-Hartschaum, insbesondere zur Verbesserung der Stauchhärte bei der Herstellung von offenzelligen PU-Hartschäumen, insbesondere mit der Maßgabe, dass zumindest 10 Gew.-Teile der eingesetzten Polyole bezogen auf 100 Gew.-Teile Polyolkomponente eine OH-Zahl größer 100, vorzugsweise größer 150, insbesondere größer 200 aufweisen.

11. Verwendung nach Anspruch 10 als schaumstabilisierende Komponente bei der Herstellung von PU-Schäumen.

12. Verwendung nach Anspruch 10 zur Verbesserung der Brandwidrigkeit des PU-Schaums, vorzugsweise der Flammwidrigkeit und/oder Reduktion der Flammhöhe, insbesondere zur Erfüllung der Brandschutznorm von mindestens B2 gemäß DIN 4102-1.

13. Verwendung nach Anspruch 10 zur Verbesserung der Stauchhärte, bestimmbar nach DIN 53421.
